# EUROPÄISCHE PATENTSCHRIFT

(11) **EP 3 312 016 B1**
(45) Veröffentlichungstag und Bekanntmachung des Hinweises auf die Patenterteilung: **01.07.2020**
(21) Anmeldenummer: 16195091.0
(22) Anmeldetag: 21.10.2016
(51) Int. Cl.: B41M 1/10, B41M 1/30, B41M 3/00, B32B 38/14, B32B 3/00, B41M 7/00

(54) **VERFAHREN ZUR HERSTELLUNG EINER STRUKTURIERTEN VERPACKUNGSFOLIE SOWIE VERPACKUNGSFOLIE**
METHOD FOR PRODUCING A STRUCTURED PACKAGING FILM AND PACKAGING FILM
PROCÉDÉ DE FABRICATION D'UNE FEUILLE D'EMBALLAGE STRUCTURÉE ET FEUILLE D'EMBALLAGE

(43) Veröffentlichungstag der Anmeldung: 25.04.2018
(73) Patentinhaber: Mondi AG, 1030 Wien (AT)
(72) Erfinder: Seifert, Ulf, 48607 Ochtrup (DE)
(74) Vertreter: Lorenz, Bernd Ingo Thaddeus

(56) Entgegenhaltungen:
- EP-A1- 1 669 205
- EP-A1- 2 305 483
- EP-A1- 2 347 967
- EP-A2- 1 792 730
- WO-A1-2009/070877
- WO-A1-2011/001200
- DE-A1-102010 017 429
- US-A1- 2013 167 741

## Beschreibung

Die Erfindung betrifft die Herstellung einer strukturierten Verpackungsfolie sowie eine strukturierte Verpackungsfolie selbst.

Im Rahmen der Erfindung ist die Verpackungsfolie insbesondere zur Bildung von Verpackungsbeuteln vorgesehen, wozu die üblichen Herstellungsverfahren eingesetzt werden können.

Verpackungsbeutel aber auch andere Folienverpackungen wie beispielsweise Tray-Verpackungen mit einer Deckfolie sind in der Regel zumindest bereichsweise zur Information eines Benutzers und zur Erzeugung eines hochwertigen Erscheinungsbildes mit einem Aufdruck versehen. Darüber hinaus ist es zu einer weiteren Verbesserung des Erscheinungsbildes auch bekannt, die an sich ebene, flache Verpackungsfolie mit einer Strukturierung zu versehen. Insbesondere können einzelne Bereiche durch eine entsprechend angepasste, nicht vollflächig wiederkehrende Strukturierung hervorgehoben werden. Beispielsweise können einzelne Textfelder, Bilder, Logos aber auch feinere Strukturen wie Umrisse oder Buchstaben hervorgehoben werden.

Um einen solchen hochwertigen 3D-Effekt bei einer Verpackungsfolie zu erreichen, ist gemäß der EP 2 347 967 B1 ein Prägen der Verpackungsfolie bekannt, wobei dann das Prägemuster auch mit einem Druckmuster in Deckung gebracht werden kann. Beispielsweise kann vorgesehen sein, dass erhabene Bereiche an einer Farbwalze vorbeigeführt werden und somit nur diese Bereiche auch eingefärbt werden.

Ein Verfahren gemäß dem Oberbegriff des Patentanspruches 1 ist aus der WO 2009/070877 A1 bekannt.

Die EP 1 669 205 A1 betrifft ein Verfahren zur Herstellung taktiler Druckbilder in einem Tiefdruckverfahren, wobei unter anderem auch durch eine entsprechend bedruckte Folie Verpackungen gebildet werden können.

Bei geprägten Verpackungsfolien ergibt sich jedoch der Nachteil, dass sich der Prägeeffekt aufgrund des Rückstellverhaltens der Polymerketten mit der Zeit zurückbildet. Diese Zurückbildung wird insbesondere beschleunigt, wenn auf die Verpackungsfolie ein Druck ausgeübt wird und/oder die Verpackungsfolie bei einer erhöhten Temperatur gelagert wird.

Des Weiteren besteht auch schlicht die Gefahr, dass geprägte Bereiche durch eine entsprechende Krafteinwirkung einfach flachgedrückt werden. Dabei ist auch zu berücksichtigen, dass eine Prägung - insbesondere wenn diese an eine bestimmte Gestaltung oder Druckbild des Beutels angepasst ist - direkt bei der Folienherstellung erfolgen soll, wobei dann die Verpackungsfolie zunächst aufgerollt, transportiert und gelagert wird. Gerade der Lagendruck auf einer Rolle kann dazu führen, dass sich die Prägung zurückbildet.

Diese Nachteile können vermieden werden, wenn gemäß der EP 2 272 647 B1 eine Verpackungsfolie gebildet wird, welche nach dem Extrusionsprozess bereichsweise noch expandiert werden kann. Die nachträgliche Aktivierung einer solchen Verpackungsfolie ist jedoch vergleichsweise aufwändig, wobei auch durch die Einbindung von aufschäumbaren Partikeln hohe Herstellungskosten resultieren. Nachteilig ist auch, dass im Prinzip die gesamte Fläche der Verpackungsfolie für eine mögliche Expansion vorbereitet ist, letztlich aber nur kleine Bereiche tatsächlich expandiert werden.

Vor diesem Hintergrund liegt der vorliegenden Erfindung die Aufgabe zugrunde, ein Verfahren zur Herstellung einer strukturierten Verpackungsfolie anzugeben, welches leicht durchgeführt werden kann, wobei die Strukturierung der Verpackungsfolie besonders hochwertig und dauerhaft ist. Des Weiteren soll eine entsprechende Verpackungsfolie angegeben werden.

Gegenstand der Erfindung und Lösung der Aufgabe sind ein Verfahren gemäß Patentanspruch 1 sowie eine Verpackungsfolie gemäß Patentanspruch 6.

Die Erfindung betrifft demnach ein Verfahren zur Herstellung einer strukturierten Verpackungsfolie, wobei eine ebene, ungeprägte erste Folienbahn einer Tiefdruckeinrichtung mit einem Druckformzylinder zugeführt wird, wobei für eine Übertragung eines Drucklacks auf die erste Folienbahn der Druckformzylinder an seiner Oberfläche eine Gravur mit einem Raster aus Näpfchen mit einer Näpfchentiefe von zumindest 50 µm aufweist, wobei mit dem Druckformzylinder ein Druckbild des Drucklacks mit bedruckten und unbedruckten Bereichen auf der ersten Folienbahn im Tiefdruck erzeugt wird und wobei der Drucklack auf der ersten Folienbahn getrocknet wird und nach dem Trocknen eine Schichtdicke von zumindest 30 µm aufweist, so dass die bedruckten und unbedruckten Bereiche eine deutlich wahrnehmbare Strukturierung bilden, wobei die erste Folienbahn zur Bildung einer Verbundfolienbahn an ihrer mit dem Druckbild versehenen Seite mit einer zweiten Folienbahn kaschiert wird.

Im Unterschied zu einem üblichen für eine Verpackungsfolie vorgesehenen Druckprozess erfolgt durch den Auftrag des Drucklacks ein auch für einen Benutzer wahrnehmbarer Materialauftrag, so dass sich daraus eine Strukturierung der gebildeten Verpackungsfolie ergibt.

Vorzugsweise weisen die das Druckraster bildenden Näpfchen eine Näpfchentiefe zwischen 80 µm und 180 µm, beispielsweise 130 µm auf, so dass der Drucklack in ausreichender Menge auf die Folienbahn aufgebracht werden kann.

In diesem Zusammenhang ist zu berücksichtigen, dass die Näpfchentiefe nicht genau der Schichtdicke des Drucklacks bei der fertigen Verpackungsfolie entspricht. Nach der Übertragung des Drucklackes in dem Tiefdruckverfahren von dem Druckformzylinder auf die erste Folienbahn kann sich der Drucklack noch gegenüber der Innenkontur der Näpfchen in seiner Form verändern und insbesondere in einem gewissen Maße noch verfließen. Zusätzlich ist das Trocknen des Drucklacks auch mit einer Reduzierung der Schichtdicke verbunden. Der Drucklack wird jedoch derart ausgewählt und auf die erste Folienbahn aufgebracht, dass der Drucklack nach dem Trocknen eine Schichtdicke von zumindest 30 µm aufweist. Unmittelbar an dem Druckbild sind dann aufgrund der entsprechenden Schichtdicke deutliche Übergänge wahrnehmbar.

Durch den Materialauftrag des Drucklackes kann die Verpackungsfolie auch vor einer Weiterverarbeitung ohne weiteres mehrlagig aufgerollt und gelagert werden. Auch ein dabei auf die Verpackungsfolie wirkender Lagendruck führt nicht zu einer Beeinträchtigung der Strukturierung.

Erfindungsgemäß wird die erste Folienbahn zur Bildung einer Verbundfolienbahn an ihrer mit dem Druckbild des Drucklacks versehenen Seite mit einer zweiten Folienbahn kaschiert. Der Drucklack ist dann innenliegend geschützt zwischen der ersten Folienbahn sowie der zweiten Folienbahn angeordnet.

Wenn eine Farbschicht oder ein Schutzlack im flüssigen Zustand aufgebracht wird, so können sich diese Schichten an die strukturierte Form des Druckbildes anpassen, so dass auch dadurch der gewünschte 3D-Effekt nicht oder zumindest nicht wesentlich beeinträchtigt wird. Sofern in nachgelagerten Druck- oder Beschichtungsschritten zumindest eine Farbschicht oder ein Schutzlack aufgebracht werden, so beträgt dann die Gesamtdicke einer solchen Beschichtung üblicherweise weniger als 10 µm.

Die Schichtdicke zumindest einer in einem zusätzlichen Druckschritt aufgebrachten Farbschicht beträgt üblicherweise weniger als 5 µm, beispielsweise zwischen 1 µm und 5 µm.

Eine solche zusätzliche Farbschicht oder auch mehrere Farbschichten in einem Mehrfarbdruck werden üblicherweise in einer vorgegebenen Relation zu dem Druckbild des Drucklacks aufgebracht. Eine Farbschicht kann beispielsweise in Überdeckung mit dem Drucklack aufgetragen werden, so dass dann die mit der Farbschicht versehenen Bereiche hervorgehoben sind. Je nach Anforderungen können aber auch die von dem Drucklack unbedruckten Bereiche mit einer Farbschicht versehen werden, wobei selbstverständlich beliebige Kombinationen möglich sind. Beispielsweise kann der Drucklack auch dafür benutzt werden, in einer grafischen Darstellung einzelne Linien oder Abschnitte besonders hervorzuheben.

In diesem Zusammenhang ist zu bemerken, dass der Drucklack im Rahmen der Erfindung unabhängig von der weiteren Ausgestaltung der Verpackungsfolie eingefärbt, klar oder auch trüb sein kann. Wenn der Drucklack eingefärbt ist, so ergibt sich allein daraus anhand des Druckbildes ein entsprechender Farbeindruck, wobei dann weitere Farben in herkömmlicher Weise mit einer geringen Schichtstärke aufgebracht werden können. Wenn der Drucklack dagegen klar oder trüb ist, steht die Ausbildung der gewünschten Strukturierung alleine im Vordergrund.

Die erste Folienbahn und die zweite Folienbahn können mit Klebstoff kaschiert werden. Dabei ist bevorzugt vorgesehen, dass der Klebstoff vollflächig auf die erste Folienbahn an der Seite des Druckbildes oder an der angrenzenden Seite der zweiten Folienbahn aufgetragen wird. Ein vollflächiger Auftrag von Klebstoff ist zweckmäßig, um dann trotz der Dickenunterschiede an den Übergängen der bedruckten und unbedruckten Bereiche eine sichere Verbindung zu erzielen.

Der Klebstoff kann in ausgehärtetem, also trockenem Zustand typischerweise mit einem Flächengewicht zwischen 2 g/m² und 8 g/m², insbesondere zwischen 4 g/m² und 6 g/m² vorliegen.

Gegenstand der Erfindung ist auch eine Verpackungsfolie, welche durch das zuvor beschriebene Verfahren erhältlich ist. Bevorzugte Merkmale des Verfahrens ergeben sich vor diesem Hintergrund auch aus der nachfolgenden Beschreibung der Verpackungsfolie. Entsprechend dienen die nachfolgenden Erläuterungen auch einer weiteren Spezifizierung des erfindungsgemäßen Verfahrens.

Die Verpackungsfolie weist eine Außenfolie, eine Trägerfolie und ein zwischen der Außenfolie und der Trägerfolie angeordnetes Druckbild mit bedruckten und unbedruckten Bereichen auf. Die Außenfolie bildet eine erste Oberfläche der Verpackungsfolie. Die Außenfolie weist eine Dicke von weniger als 30 µm und der Drucklack in den bedruckten Bereichen eine Schichtdicke von mehr als 30 µm auf, wobei der Drucklack unmittelbar an die Außenfolie angrenzt oder über zumindest eine Zwischenschicht in einem Abstand zu der Außenfolie von weniger als 15 µm angeordnet ist, so dass die mit dem Drucklack bedruckten und unbedruckten Bereiche an der von der Außenfolie gebildeten ersten Oberfläche durch die Außenfolie hindurch eine Strukturierung bilden.

Erfindungsgemäß kann sich trotz der verdeckten Anordnung des Drucklackes die dadurch gebildete Strukturierung noch an der ersten Oberfläche abzeichnen, was durch die große Schichtdicke des Drucklacks einerseits sowie die geringe Dicke der Außenfolie andererseits erreicht wird. Insbesondere ist die Dicke der Außenfolie kleiner als die Schichtdicke des Drucklacks an der Verpackungsfolie, also in dem trockenen Zustand des Drucklacks.

In Bezug auf das zuvor beschriebene Verfahren kann die Außenfolie entweder von der ersten Folienbahn oder der zweiten Folienbahn gebildet werden. Bei der beschriebenen verdeckten Anordnung des Drucklacks in einem Konterdruck kann also bei der Herstellung sowohl die Außenfolie als auch die Trägerfolie als erste Folienbahn bedruckt werden.

Um bei dem Drucklack im trockenen Zustand eine Schichtdicke von zumindest 30 µm bei möglichst geringen Kosten zu erreichen, weist der Drucklack gemäß einer bevorzugten Ausgestaltung der Erfindung vergleichsweise große Partikel auf. Insbesondere können Partikel mit einem mittleren Partikeldurchmesser größer 25 µm, beispielsweise zwischen 30 µm und 40 µm, vorgesehen sein. Der mittlere Partikeldurchmesser bezieht sich dabei gemäß den allgemeinen Definitionen auf eine Bestimmung anhand eines äquivalenten Kugeldurchmessers, wodurch eine von der Kugelform abweichende Form der Partikel berücksichtigt wird. Insbesondere sind anorganisch, nicht-metallische Partikel wie Siliciumdioxid geeignet.

Gemäß einer bevorzugten Ausgestaltung der Erfindung ist das Material der Außenfolie ausgewählt aus der Gruppe orientiertes Polyethylenterephthalat (O-PET), orientiertes Polypropylen (O-PP), orientierte Polymilchsäure (O-PLA), orientiertes Polyamid (O-PA) und Cellulose. Dabei ist orientiertes Folienmaterial vorzugsweise biaxial orientiert. Neben einer Ausgestaltung als Monofolie kommen auch mehrschichtige Außenfolien in Betracht. Besonders bevorzugt beträgt die Dicke der Außenfolie weniger als 20 µm.

Bei orientiertem Polyethylenterephthalat (O-PET) als bevorzugtem Material können besonders geringe Dicken von beispielsweise 12 µm vorgesehen sein. Eine geringe Schichtdicke ist im Rahmen der Erfindung ausschlaggebend dafür, dass sich die Kontur des darunter angeordneten Druckbildes des Drucklackes gut an der ersten Oberfläche abzeichnen kann.

Die Trägerfolie weist typischerweise eine Dicke zwischen 20 µm und 150 µm, insbesondere zwischen 40 µm und 120 µm auf. An einer der Außenfolie gegenüberliegenden Seite, welche eine zweite Oberfläche der Verpackungsfolie bildet, ist zweckmäßigerweise eine Siegelschicht vorgesehen, so dass die Verpackungsfolie auf einfache Weise durch Heißsiegeln beispielsweise zu einem Folienverpackungsbeutel geformt werden kann. Als heißsiegelbares Material sind besonders Polyolefine wie Polyethylen und Polypropylen einschließlich der jeweiligen Copolymere geeignet.

Auch die Trägerfolie kann mehrschichtig coextrudiert oder kaschiert sein. Beispielsweise kann eine Siegelschicht auf Polyolefin, insbesondere Polyethylen mit einer metallisierten Schicht aus orientiertem Polyethylenterephthalat kaschiert sein.

Der Drucklack ist vorzugsweise auf der Basis von Cellulosenitrat bzw. Cellulosedinitrat gebildet. Bei einer solchen Ausgestaltung des Lacks ergibt sich der Vorteil, dass dieser dann leicht in dem Tiefdruckverfahren verarbeitet werden kann, wobei auch eine gewünschte Viskosität einstellbar ist.

Die Erfindung wird im Folgenden anhand rein exemplarischen Figuren erläutert. Es zeigen:
- Fig. 1: Einen aus einer erfindungsgemäßen Verpackungsfolie gebildeten Verpackungsbeutel,
- Fig.2 bis Fig. 5: mögliche Ausgestaltungen einer Verpackungsfolie.

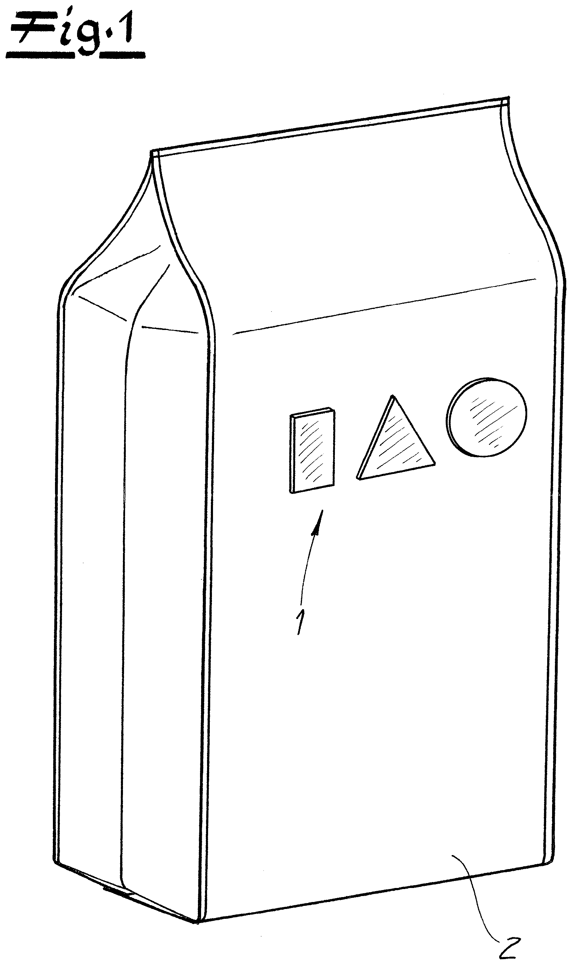

Die Fig. 1 zeigt exemplarisch einen Folienverpackungsbeutel, der aus einer erfindungsgemäßen Verpackungsfolie gebildet ist.

Wie nachfolgend im Detail erläutert, weist der Folienverpackungsbeutel eine Strukturierung auf, welche durch einen Drucklack 1 gebildet ist, wobei der Drucklack 1 mit einem Druckbild aus bedruckten und unbedruckten Bereichen angeordnet ist.

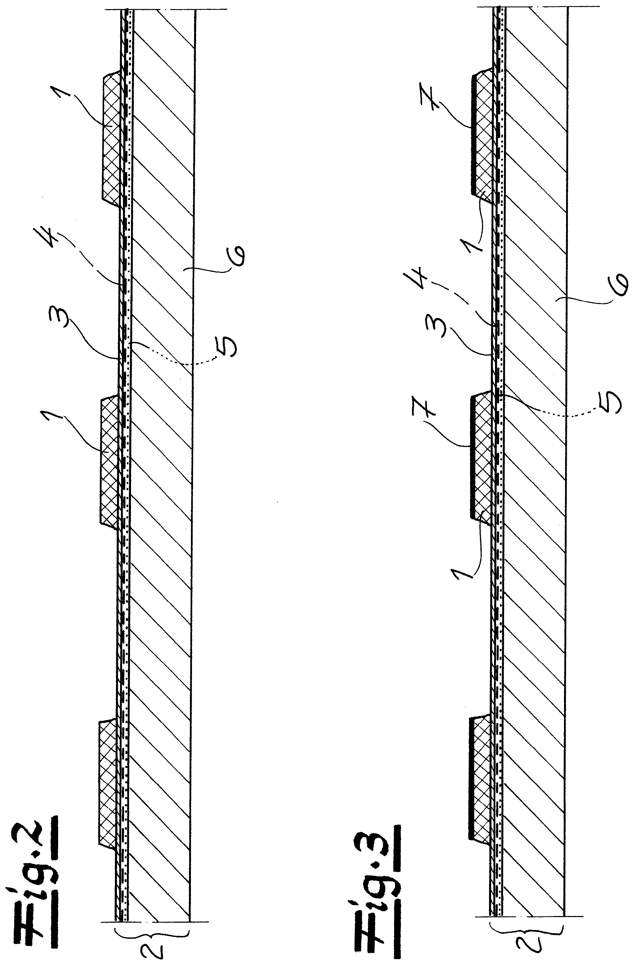

Gemäß einer in der Fig. 2 dargestellten nicht erfindungsgemäßen Ausgestaltung der Verpackungsfolie ist der Drucklack 1 bereichsweise auf eine Trägerfolie 2 aufgebracht, welche zusammen mit dem Drucklack 1 die gesamte Verpackungsfolie bildet. Die Trägerfolie 2 ist mehrschichtig kaschiert und weist in dem dargestellten Ausführungsbeispiel eine Schicht 3 aus orientiertem Polyethylenterephthalat auf, welche mit einer Metallisierung 4 versehen ist und an der mit der Metallisierung 4 versehenen Seite durch Kaschierkleber 5 mit einer Siegelschicht 6 aus Polyethylen verbunden ist.

Der Drucklack 1 weist auf der Trägerfolie 2 im trockenen Zustand eine Schichtdicke von zumindest 30 µm, beispielsweise zwischen 35 µm und 40 µm auf. Es ergibt sich somit alleine durch den Drucklack 1 eine Strukturierung, welche auch für einen Benutzer deutlich wahrnehmbar ist. Wenn der Drucklack 1 selbst eingefärbt ist, ergibt sich ein mit der räumlichen Struktur übereinstimmendes Farbmuster.

Die Anordnung des Drucklackes 1 an einer Oberfläche der Verpackungsfolie wird in der Praxis auch als Schöndruck bezeichnet.

Bei einer ansonsten gleichen Ausgestaltung zeigt die Fig. 3 eine nicht erfindungsgemäße Weiterbildung, wobei zusätzlich zu dem Drucklack 1 eine lediglich dünne Farbschicht 7 vorgesehen ist. Die Dicke der Farbschicht 7 beträgt im trockenen Zustand, also bei der Verpackungsfolie als fertigem Produkt, weniger als 5 µm, beispielsweise zwischen 1 µm und 5 µm.

In der Fig. 3 ist lediglich exemplarisch dargestellt, dass die Farbschicht 7 genau in Deckung mit dem Druckbild des Drucklacks 1 angeordnet ist. Eine solche Anordnung ist insbesondere dann zweckmäßig, wenn der Drucklack 1 selbst nicht eingefärbt ist.

Sofern der Drucklack 1 durchsichtig oder zumindest durchscheinend ist, kann die Farbschicht 7 auch vor dem Drucklack 1 aufgebracht werden, so dass sich dann die Farbschicht 7 unterhalb des Drucklacks 1 befindet.

Die Darstellung der Farbschicht 7 in genauer Überdeckung mit dem Drucklack 1 ist nur exemplarisch. Bei einer solchen Ausgestaltung unterstützt die Farbschicht 7 die von dem Druckbild des Drucklackes 1 vorgegebene Strukturierung. Selbstverständlich kann die Farbschicht 7 auch in den mit Drucklack 1 unbedruckten Bereichen vorgesehen sein, wobei dann die Farbschicht 7 vor dem Drucklack 1 aufzubringen ist. Des Weiteren können auch in einem Mehrfarbdruck mehrere Farbschichten vor oder nach dem Drucklack 1 aufgebracht werden.

Bei der Ausgestaltung gemäß der Fig. 2 und 3 liegt der Drucklack 1 bzw. die darauf angeordnete Farbschicht 7 frei an einer Oberfläche der Verpackungsfolie. Um einen Abrieb zu vermeiden, kann eine vollflächige Beschichtung mit einem Schutzlack erfolgen. Bei einem vollflächigen Auftrag eines Schutzlackes im flüssigen Zustand kann sich dieser an die von dem Drucklack 1 vorgegebene Strukturierung anpassen, so dass die Struktur im Wesentlichen erhalten bleibt. Auch ein Schutzlack wird lediglich dünn, beispielsweise mit einer Schichtdicke von weniger als 5 µm, aufgetragen.

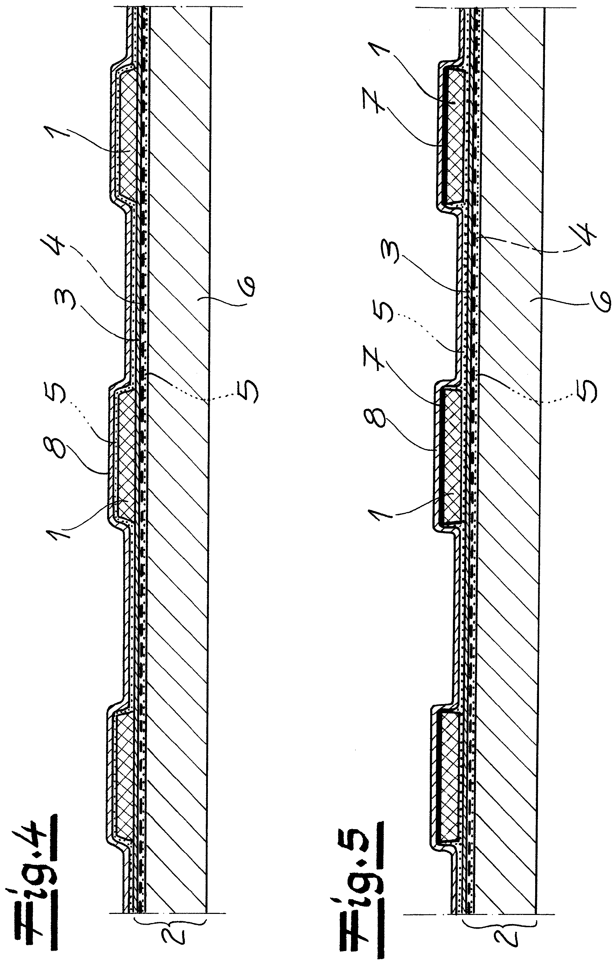

Die Fig. 4 zeigt eine erfindungsgemäße Ausgestaltung, wobei das Druckbild des Drucklacks 1 von einer Außenfolie 8 abgedeckt ist.

Die Dicke der Außenfolie 8 ist kleiner als die Schichtdicke des Drucklacks 1, so dass sich die Außenfolie 8 an die Kontur des Drucklacks 1 gut anpassen kann und die Strukturierung auch durch die Außenfolie 8 hindurch sichtbar ist. Die Außenfolie 8 und die Trägerfolie 2 können mit Kaschierkleber 5 miteinander verklebt werden, wobei der Kaschierkleber 5 vorzugsweise vollflächig mit einem Flächengewicht zwischen 4 g/m² und 6 g/m² (bezogen auf den trockenen Zustand) vorgesehen ist.

Die Dicke der Außenfolie 8 beträgt vorzugsweise weniger als 20 µm. Besonders geeignet ist beispielsweise eine Außenfolie 8 aus orientiertem Poylethylenterephthalat (O-PET), welche beispielsweise eine Dicke von lediglich 12 µm aufweist. Auch die in dem Ausführungsbeispiel rein exemplarisch mit einer Metallisierung 4 versehen Schicht 3 aus orientiertem Polyethylenterephthalat kann eine Dicke von 12 µm aufweisen. Die Dicke der Siegelschicht 6 kann beispielsweise 100 µm betragen.

Wie im Zusammenhang mit der Fig. 3 erläutert, kann auch bei der Ausgestaltung gemäß der Fig. 4 zumindest eine weitere Farbschicht 7 vorgesehen sein. Diese wird üblicherweise auch verdeckt zusammen mit dem Drucklack 1 zwischen der Trägerfolie 2 und der Außenfolie 8 gebildet, wobei hinsichtlich der unterschiedlichen Ausgestaltungsmöglichkeiten auf die Erläuterungen zu Fig. 3 verwiesen wird.

Im Rahmen der Ausführungsbeispiele beziehen sich die Begriffe der Außenfolie 8 sowie der Trägerfolie 2 auf die Anordnung der Verpackungsfolie bei einer Folienverpackung, wie sie in der Fig. 1 dargestellt ist. Die Außenfolie 8 bildet dabei eine üblicherweise durchsichtige Außenseite der Folienverpackung, während der Drucklack 1 bzw. zumindest eine weitere Farbschicht 7 dann geschützt angeordnet sind. Die Trägerfolie 2 ist bei einer Beutelverpackung innenliegend angeordnet, wobei aufgrund der Siegelschicht 6 Nähte der Folienverpackung leicht durch Heißsiegeln gebildet werden können.

Der Begriff der Trägerfolie 2 bezieht sich in diesem Zusammenhang nicht auf den Aufdruck des Drucklackes 1.

So zeigt die Fig. 5 eine erfindungsgemäße Ausgestaltung, bei der eine Farbschicht 7 und der Drucklack 1 auf die Innenseite der Außenfolie 8 aufgebracht sind, wobei die Außenfolie 8 dann mit der entsprechenden Seite durch Kaschierkleber 5 mit der ansonsten wie zuvor beschriebenen Trägerfolie 2 kaschiert ist.

## Patentansprüche

1. Verfahren zur Herstellung einer strukturierten Verpackungsfolie,
wobei eine ebene, ungeprägte erste Folienbahn einer Tiefdruckeinrichtung mit einem Druckformzylinder zugeführt wird,
wobei für eine Übertragung eines Drucklacks (1) auf die erste Folienbahn der Druckformzylinder an seiner Oberfläche eine Gravur mit einem Raster aus Näpfchen mit einer Näpfchentiefe von zumindest 50 µm aufweist,
wobei mit dem Druckformzylinder ein Druckbild des Drucklacks (1) mit bedruckten und unbedruckten Bereichen auf der ersten Folienbahn erzeugt wird und
wobei der Drucklack (1) auf der ersten Folienbahn getrocknet wird und nach dem Trocknen eine Schichtdicke von zumindest 30 µm aufweist, so dass die bedruckten und unbedruckten Bereiche eine Strukturierung bilden,
**dadurch gekennzeichnet, dass** die erste Folienbahn zur Bildung einer Verbundfolienbahn an ihrer mit dem Druckbild versehenen Seite mit einer zweiten Folienbahn kaschiert wird.

2. Verfahren nach Anspruch 1, **dadurch gekennzeichnet, dass** in zumindest einem zusätzlichen Druckschritt eine Farbschicht mit einer Schichtdicke von weniger als 5 µm in zumindest teilweiser Überdeckung mit dem Drucklack aufgebracht wird.

3. Verfahren nach Anspruch 1 oder 2, **dadurch gekennzeichnet, dass** die erste Folienbahn und die zweite Folienbahn mit einem Klebstoff kaschiert werden, wobei der Klebstoff derart vollflächig aufgetragen wird, dass der Klebstoff nach einem Erstarren mit einem Flächengewicht zwischen 2 g/m² und 8 g/m² vorliegt.

4. Verfahren nach einem der Ansprüche 1 bis 3, **dadurch gekennzeichnet, dass** die erste Folienbahn vor einer Weiterverarbeitung mehrlagig aufgerollt und gelagert wird.

5. Verfahren nach einem der Ansprüche 1 bis 4, **dadurch gekennzeichnet, dass** die Näpfchen eine Näpfchentiefe zwischen 80 µm und 180 µm aufweisen.

6. Verpackungsfolie mit einer eine erste Oberfläche bildenden Außenfolie (8), einer Trägerfolie (2) und einem zwischen der Außenfolie (8) und der Trägerfolie (2) angeordneten Druckbild mit bedruckten und unbedruckten Bereichen aus einem Drucklack (1), wobei die Außenfolie (8) eine Dicke von weniger als 30 µm und der Drucklack (1) in den bedruckten Bereichen eine Schichtdicke von mehr als 30 µm aufweist und wobei der Drucklack (1) unmittelbar an die Außenfolie (8) angrenzt oder in einem Abstand zu der Außenfolie (8) von weniger als 15 µm angeordnet ist, so dass die mit dem Drucklack (1) bedruckten und unbedruckten Bereiche an der von der Außenfolie (8) gebildeten ersten Oberfläche durch die Außenfolie (8) hindurch eine Strukturierung bilden.

7. Verpackungsfolie nach Anspruch 6, wobei der Drucklack (1) anorganische, nicht-metallische Partikel mit einem mittleren Partikeldurchmesser größer 25 µm aufweist.

8. Verpackungsfolie nach Anspruch 6 oder 7, wobei die Außenfolie (8) aus einem Material ausgewählt aus der Gruppe orientiertes Polyethylenterephthalat (O-PET), orientiertes Polypropylen (O-PP), orientierte Polymilchsäure (O-PLA), orientiertes Polyamid (O-PA) und Cellulose gebildet ist.

9. Verpackungsfolie nach einem der Ansprüche 6 bis 8, wobei die Trägerfolie (2) eine Dicke zwischen 20 µm und 150 µm aufweist und an einer der Außenfolie (8) gegenüberliegenden Seite, welche eine zweite Oberfläche bildet, eine Siegelschicht (6) aufweist.

10. Verpackungsfolie nach einem der Ansprüche 6 bis 9, wobei der Drucklack (1) eingefärbt ist.

11. Verpackungsfolie nach einem der Ansprüche 6 bis 10, wobei der Drucklack (1) auf Cellulosenitrat-Basis gebildet ist.

## Claims

1. Method for producing a structured packaging film,
wherein a flat unembossed first film web is fed to an intaglio printing device having a printing form cylinder,
wherein for transfer of a printing varnish (1) to the first film web, the printing form cylinder has an engraving having an array of cavities having a cavity depth of at least 50 µm on its surface,
wherein a print image of the printing varnish (1) with printed and unprinted areas is produced on the first film web using the printing form cylinder and
wherein the printing varnish (1) on the first film web is dried and after drying has a layer thickness of at least 30 µm so that the printed and unprinted areas form a structuring,
**characterized in that** the first film web is laminated with a second film web to form a composite film web on its side provided with the print image.

2. Method according to Claim 1, **characterized in that** in at least one additional printing step, a coloured layer having a layer thickness of at least 5 µm is applied in at least partial overlap with the printing varnish.

3. Method according to Claim 1 or 2, **characterized in that** the first film web and the second film web are laminated with an adhesive, wherein the adhesive is applied over the entire surface in such a manner that after solidification, the adhesive is present with a weight per unit area between 2 g/m² and 8 g/m².

4. Method according to one of Claims 1 to 3, **characterized in that** before a further processing, the first film web is rolled up in multiple layers and stored.

5. Method according to one of Claims 1 to 4, **characterized in that** the cavities have a cavity depth between 80 µm and 180 µm.

6. Packaging film comprising an outer film (8) forming a first surface, a support film (2) and a printed image having printed and unprinted areas comprising a printing varnish (1) arranged between the outer film (8) and the support film (2), wherein the outer film (8) has a thickness of less than 30 µm and the printing varnish (1) in the printed areas has a layer thickness of more than 30 µm and wherein the printing varnish (1) directly adjoins the outer film (8) or is arranged at a distance from the outer film (8) of less than 15 µm so that the areas printed with printing varnish (1) and unprinted areas form a structuring through the outer film (8) at the first surface formed by the outer film (8).

7. Packaging film according to Claim 6, wherein the printing varnish (1) comprises inorganic non-metallic particles having an average particle diameter greater than 25 µm.

8. Packaging film according to Claim 6 or 7, wherein the outer film (8) is formed from a material selected from the group of oriented polyethylene terephthalate (O-PET), oriented polypropylene (O-PP, oriented polylactic acid (O-PLA), oriented polyamide (O-PA) and cellulose.

9. Packaging film according to one of Claims 6 to 8, wherein the support film (2) has a thickness between 20 µm and 150 µm and has a sealing layer (6) on a side opposite the outer film (8) which forms a second surface.

10. Packaging film according to one of Claims 6 to 9, wherein the printing varnish (1) is coloured.

11. Packaging film according to one of Claims 6 to 10, wherein the printing varnish (1) is formed on a cellulose nitrate base.

## Revendications

1. Procédé de fabrication d'un film d'emballage structuré,
dans lequel un premier lé de film plat non marqué est dirigé vers un dispositif d'héliogravure avec un rouleau d'impression,
dans lequel, pour un transfert d'un vernis d'impression (1) sur le premier lé de film, le rouleau d'impression présente sur sa surface, une gravure avec une grille de cuvettes avec une profondeur de cuvette d'au moins 50 µm,
dans lequel une image imprimée à partir du vernis d'impression (1) avec des zones imprimées et non imprimées est produite sur le premier lé avec le rouleau d'impression et
dans lequel le vernis d'impression (1) sur le premier lé de film est séché et présente après le séchage, une épaisseur de couche d'au moins 30 µm, de sorte que les zones imprimées et non imprimées forment une structuration,
**caractérisé en ce que** le premier lé de film est pelliculé sur sa face dotée de l'image imprimée avec un second lé de film pour former un lé de film composite.

2. Procédé selon la revendication 1, **caractérisé en ce que** dans au moins une étape d'impression supplémentaire, une couche de vernis avec une épaisseur de couche inférieure à 5 µm est appliquée en recouvrement au moins partiel avec le vernis d'impression.

3. Procédé selon la revendication 1 ou 2, **caractérisé en ce que** le premier lé de film et le second lé de film sont pelliculés avec une colle, dans lequel la colle est appliquée sur toute la surface de telle façon que la colle après avoir figé, a un poids surfacique entre ² g/m² et 8 g/m².

4. Procédé selon l'une des revendications 1 à 3, **caractérisé en ce que** le premier lé de film est roulé en plusieurs couches et stocké avant un traitement ultérieur.

5. Procédé selon l'une des revendications 1 à 4, **caractérisé en ce que** les cuvettes présentent une profondeur de cuvette entre 80 µm et 180 µm.

6. Film d'emballage comprenant un film extérieur (8) formant une première surface, un film porteur (2) et une image imprimée disposée entre le film extérieur (8) et le film porteur (2) avec des zones imprimées et non imprimées à partir d'un vernis d'impression (1), dans lequel le film extérieur (8) présente une épaisseur inférieure à 30 µm et le vernis d'impression (1) présente dans les zones imprimées une épaisseur de couche supérieure à 30 µm, et dans lequel le vernis d'impression (1) est délimité directement contre le film extérieur (8) ou est disposé à une distance par rapport au film extérieur (8) inférieure à 15 µm, de sorte que les zones imprimées et non imprimées avec le vernis d'impression (1) forment à travers le film extérieur (8), une structuration sur la première surface formée par le film extérieur (8).

7. Film d'emballage selon la revendication 6, dans lequel le vernis d'impression (1) présente des particules anorganiques, non-métalliques avec un diamètre de particule moyen supérieur à 25 µm.

8. Film d'emballage selon la revendication 6 ou 7, dans lequel le film extérieur (8) est sélectionné dans un matériau parmi le groupe du polyéthylène téréphtalate (O-PET), du polypropylène orienté (O-PP), de l'acide polylactique orienté (O-PLA), du polyamide orienté (O-PA) et de la cellulose.

9. Film d'emballage selon l'une des revendications 6 à 8, dans lequel le film porteur (2) présente une épaisseur entre 20 µm et 150 µm et présente une couche de scellement (6) sur une face opposée au film extérieur (8), laquelle forme une seconde surface.

10. Film d'emballage selon l'une des revendications 6 à 9, dans lequel le vernis d'impression (1) est encré.

11. Film d'emballage selon l'une des revendications 6 à 10, dans lequel le vernis d'impression (1) est à base de nitrate de cellulose.
